# EUROPEAN PATENT APPLICATION

(11) **EP 4 517 670 A1**
(43) Date of publication of application: **05.03.2025**
(21) Application number: 23816120.2
(22) Date of filing: 31.05.2023
(51) Int. Cl.: G06T 11/60, G06T 1/00, H04N 23/60

(54) **IMAGE PROCESSING DEVICE, SERVER DEVICE, AND IMAGE PROCESSING METHOD**

(30) Priority: 31.05.2022 JP 2022088567; 28.02.2023 JP 2023030267
(71) Applicant: JVCKenwood Corporation, Yokohama-shi, Kanagawa 2210022 (JP)
(72) Inventor: AOKI, Takeshi, Yokohama-shi, Kanagawa 221-0022 (JP); HIROSE, Satoru, Yokohama-shi, Kanagawa 221-0022 (JP)
(74) Representative: Carstens, Dirk Wilhelm
(86) International application number: PCT/JP2023/020328
(87) International publication number: WO 2023/234363

(57) **Abstract**

An image processing device includes: a partial image extractor configured to extract partial images of multiple subjects to be imaged who are contained in each of multiple images captured at different times; a vote unit configured to accept multiple votes by multiple voters on the partial images of each of the subjects to be imaged among the partial images that are extracted by the partial image extractor; a partial image determination unit configured to determine one of the partial images based on a result of the votes on the partial images that are accepted by the vote unit; and an image processor configured to generate a partial image of the subject based on the partial image that is determined by the partial image determination unit.

## Description

### Field

The present disclosure relates to an image processing device, a server device, and an image processing method.

### Background

A technique of, when a group photo containing multiple subjects to be imaged or the like, is imaged, generating a group photo with which all the subjects to be imaged are satisfied has been known. For example, a technique of generating a group photo by combining partial images which are selected by the respective subjects from among the group photos captured by continuous shots with a reference image is described in Patent Literature 1.

### Citation List

### Patent Literature

Patent Literature 1: Japanese Laid-open Patent Publication No. 2010-16678 A

### Summary

According to the technique described in Patent Literature 1, in continuous shots captured by a digital camera, a controller of the digital camera makes face evaluations and thereby selects partial images to be combined with a reference image. In this case, when the group photo is viewed as a whole, there is a possibility that the group photo with which all the subjects to be imaged are satisfied may not be generated.

An object of the present disclosure is to provide an image processing device, a server device, and an image processing method that make it possible to generate a photo with which all subjects to be imaged are satisfied.

According to one aspect of the present invention, there is provided an image processing device comprising: a partial image extractor configured to extract partial images of multiple subjects to be imaged who are contained in each of multiple images captured at different times; a vote unit configured to accept multiple votes by multiple voters on the partial images of each of the subjects to be imaged among the partial images that are extracted by the partial image extractor; a partial image determination unit configured to determine one of the partial images based on a result of the votes on the partial images that are accepted by the vote unit; and an image processor configured to generate a partial image of the subject based on the partial image that is determined by the partial image determination unit.

According to one aspect of the present invention, there is provided a server device comprising: a partial image extractor configured to extract partial images of multiple subjects to be imaged who are contained in each of multiple images captured at different times; a partial image determination unit configured to determine one of the partial images from the partial images of each of the subjects to be imaged among the partial images that are extracted by the partial image extractor based on multiple votes by multiple terminal devices; and an image processor configured to generate a partial image of the subject based on the partial image that is determined by the partial image determination unit.

According to one aspect of the present invention, there is provided an image processing method comprising: a step of extracting partial images of multiple subjects to be imaged who are contained in each of multiple images captured at different times; a step of determining one of the partial images from the partial images of each of the subjects to be imaged among the extracted partial images based on multiple votes by multiple voters; and a step of generating a partial image of the subject based on the determined partial image.

According to the disclosure, it is possible to generate a photo with which all subjects to be imaged are satisfied.

### Brief Description of Drawings

FIG. 1 is a block diagram illustrating an example of a configuration of an image processing device according to a first embodiment;
FIG. 2 is a flowchart illustrating a flow of processes of extracting partial images according to the first embodiment;
FIG. 3 is a diagram for explaining a method of extracting partial images according to the first embodiment;
FIG. 4 is a diagram for explaining a method of collecting partial images for respective subjects to be imaged according to the first embodiment;
FIG. 5 is a flowchart illustrating a flow of image processing according to the first embodiment;
FIG. 6 is a diagram for explaining a method of displaying partial images according to the first embodiment;
FIG. 7 is a flowchart illustrating a flow of image processing according to a second embodiment; and
FIG. 8 is a block diagram illustrating an example of a configuration of an image processing system according to a third embodiment.

### Description of Embodiments

Embodiments according to the disclosure will be described in detail below with reference to the accompanying drawings. Note that the embodiments do not limit the disclosure and, in the following embodiments, the same parts are denoted with the same reference numerals and thereby redundant description will be omitted.

### [First Embodiment]

### Image Processing Device

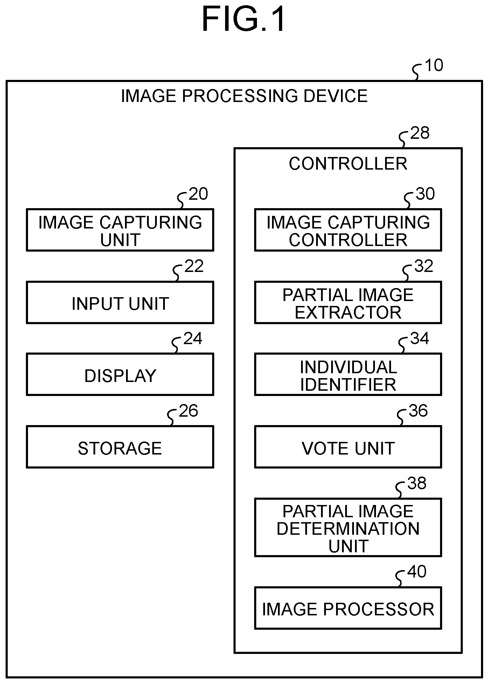

Using FIG. 1, an example of a configuration of an image processing device according to a first embodiment will be described. FIG. 1 is a block diagram illustrating an example of a configuration of an image processing device according to the first embodiment.

As illustrated in FIG. 1, an image processing device 10 includes an imager 20, an input unit 22, a display 24, a storage 26, and a controller 28. The image processing device 10 is a device that, when a group photo containing multiple subjects to be imaged or the like, is captured, accepts votes from the subjects to be imaged and generates a group photo with which all the subjects to be imaged are satisfied. The image processing device 10 is specifically a personal computer (PC), a smartphone, or a photography device that is set in an amusement facility. Note that the image processing device 10 need not necessarily include the imager 20.

The imager 20 is a camera that captures an image of a subject to be imaged within an image capturing area. The imager 20, for example, takes a group photo containing multiple subjects to be imaged who are positioned within the image capturing area.

The input unit 22 receives various types of input operations on the image processing device 10. The input unit 22 outputs an input signal corresponding to a received input operation to the controller 28. The input unit 22, for example, includes a touch panel, a button, and a switch. When a touch panel is used as the input unit 22, the input unit 22 is arranged on the display 24.

The display 24 displays various types of videos. The display 24, for example, displays a group photo containing multiple subjects to be imaged that is captured by the imager 20. The display 24, for example, displays partial images that are extracted by a partial image extractor 32 of the controller 28. The display 24 is, for example, a display containing a liquid crystal display (LCD), organic Electro-Luminescence, or the like.

The storage 26 stores various types of information. The storage 26 stores information such as content of computation by the controller 28 and programs. The storage 26, for example, includes at least one of a main storage device such as a RAM (Random Access Memory) or a ROM (Read Only Memory) and an external storage device such as a HDD (Hard Disk Drive).

The storage 26 may store a training model that is used to specify a subject to be imaged who is contained in an image captured by the imager 20. The training model is an AI (Artificial Intelligence) model that is used to specify subjects to be imaged based on a face image of the subjects to be imaged. The training model is configured to output information for specifying a subject to be imaged by being input of a face image of the subject to be imaged. The training model can be a trained model using a CNN (Convolutional Neural Network).

The controller 28 controls each of the units of the image processing device 10. The controller 28, for example, includes an information processing device such as a CPU (Central Processor) or a MPU (Micro Processor), and a storage such as a RAM or a ROM. The controller 28 may be realized by an integrated circuit such as an ASIC (Application Specific Integrated Circuit) or a FPGA (Field Programmable Gate Array). The controller 28 may be realized by a combination of hardware and software.

The controller 28 includes an image capturing controller 30, the partial image extractor 32, an individual identifier 34, a vote unit 36, a partial image determination unit 38, and an image processor 40.

The image capturing controller 30 controls the imager 20 and causes the imager 20 to capture an image. The image capturing controller 30, for example, controls the imager 20 and causes the imager 20 to take multiple group photos that are captured at different times. The image capturing controller 30 acquires the images captured by the imager 20. When not including the imager 20, the image processing device 10 need not include the image capturing controller 30 either.

The partial image extractor 32 extracts a predetermined area as a partial image from an image captured by the imager 20. For example, when the imager 20 acquires a group photo containing multiple subjects to be imaged, the partial image extractor 32 extracts the predetermined area of the subject to be imaged respectively. The predetermined area of the subject to be imaged is, for example, a face area. However, the predetermined area is not limited thereto. The predetermined area of the subject to be imaged may contain a physical area other than the face area. When the predetermined area is face area, the partial image extractor 32 extracts the face area of the subject to be imaged as a partial image. The partial image extractor 32, for example, extracts the face areas of the respective subjects to be imaged from the group photos that are captured successively. The partial image extractor 32 causes the storage 26 to store the extracted partial images. When the image processing device 10 does not include the imager 20, the partial image extractor 32 may receive images that are captured by another image capturing device such as another digital camera not illustrated in the drawings, and extract partial images.

The individual identifier 34 identifies whether a person is eligible to vote onto the partial images. Details of the individual identifier 34 will be described later.

The vote unit 36 accepts multiple votes by multiple voters on partial images of voted persons among the partial images that are extracted by the partial image extractor 32. Details of the vote unit 36 will be described below.

Based on a result of votes onto the partial images, the partial image determination unit 38 determines a partial image to be combined with a reference image. Details of the partial image determination unit 38 will be described below. The reference image is any one of the group photos that are captured by the imager 20.

Based on the partial images that are determined by the partial image determination unit 38, the image processor 40 executes image processing on corresponding areas in the reference image. The image processor 40, for example, executes combining processing of combining partial images with a reference image or deforming processing of deforming a reference image. Details of the image processor 40 will be described below.

### Partial Image Extraction Process

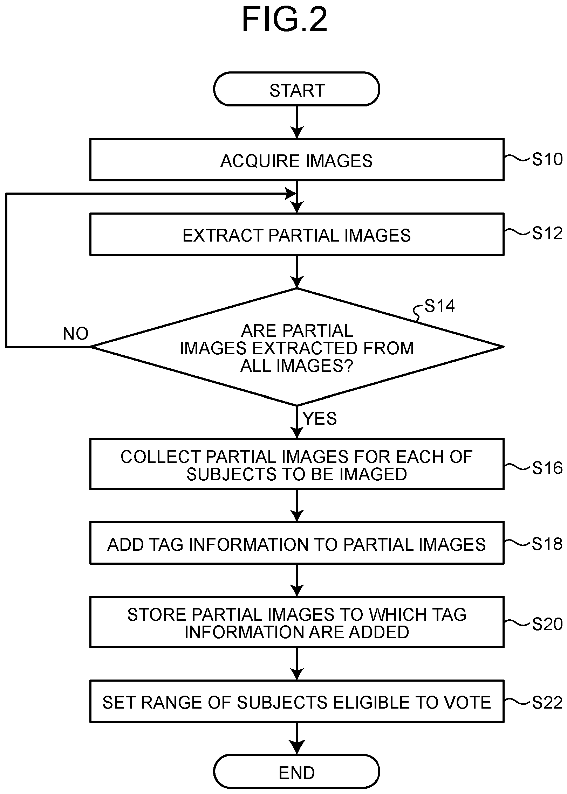

Using FIG. 2, a process of extracting the partial image according to the first embodiment will be described. FIG. 2 is a flowchart illustrating a flow of processes of extracting the partial image according to the first embodiment.

The image capturing controller 30 acquires images from the imager 20 (step S10). Specifically, the image capturing controller 30 acquires continuous photos relating to group photos that are captured continuously and that contain multiple subjects to be imaged from the imager 20. The continuous photos herein are a series of photos that are captured in a predetermined period by a burst capture function implemented by the image capturing controller 30. The predetermined period is, for example, 100 msec. Multiple photos that are captured, without the burst capture function, at different times by few seconds in the same composition may be as continuous photos. Then, the process proceeds to step S12.

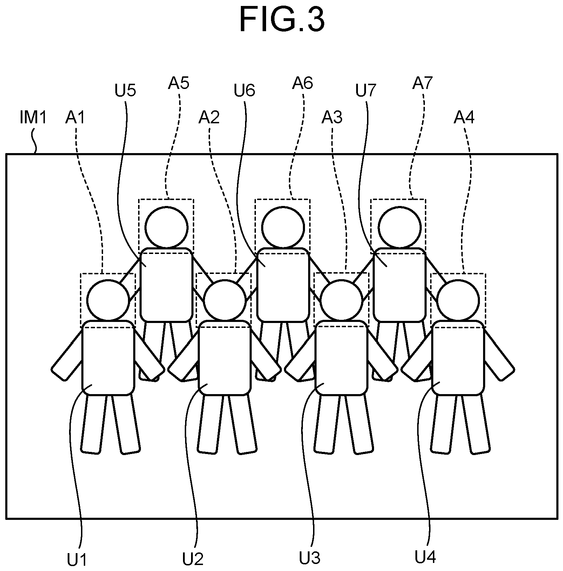

The partial image extractor 32 extracts partial images from the images that are acquired by the image capturing controller 30 (step S12). FIG. 3 is a diagram for explaining the method of extracting partial images according to the first embodiment. FIG. 3 illustrates Image IM1 that is one of continuous photos of group photos containing User U1, User U2, User U3, User U4, User U5, User U6, and User U7. Users U1 to U7 are an example of the subjects to be imaged. The partial image extractor 32 executes an image recognition process on Image IM1 and extracts face areas of Users U1 to U7. In the example illustrated in FIG. 3, the partial image extractor 32 extracts Areas A1 to A7 as face areas of respective Users U1 to U7. Then, the process proceeds to step S14.

The partial image extractor 32 determines whether partial images are extracted from all the images that are acquired by the image capturing controller 30 (step S14). Specifically, the partial image extractor 32 determines whether partial images are extracted from all the continuous photos that are acquired at step S10. When it is determined that partial images are extracted from all the images that are acquired by the image capturing controller 30 (step S14; Yes), the process proceeds to step S16. When it is not determined that partial images are extracted from all the images that are acquired by the image capturing controller 30 (step S14; No), the process proceeds to step S12. In other words, the partial image extractor 32 repeats the process from step S12 to step S14 until partial images are extracted from all the continuous photos.

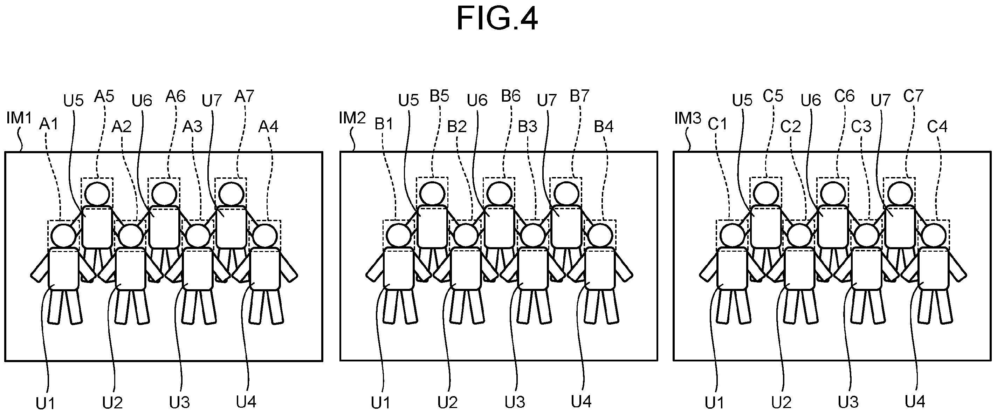

When it is determined as "Yes" at step S14, the partial image extractor 32 collects partial images for each of the subjects to be imaged (step S16). FIG. 4 is a diagram for explaining a method of collecting partial images for each subject to be imaged according to the first embodiment. Image IM1, Image IM2 and Image IM3 are illustrated in FIG. 4. Images IM1 to IM3 are continuous photos of group photos that are captured continuously and that contain Users U1 to U7. At step S12, the partial image extractor 32 executes the image recognition process on Image IM1 and extracts Areas A1 to A7 as the respective face areas of Users U1 to U7. At step S12, the partial image extractor 32 executes the image recognition process on Image IM2 and extracts Areas B1 to B7 as the respective face areas of Users U1 to U7. At step S12, the partial image extractor 32 executes the image recognition process on Image IM3 at step S12 and extracts Areas C1 to C7 as the respective face areas of Users U1 to U7. A specific process of step S16 will be described from here. The partial image extractor 32 determines the same person contained in Images IM1 to IM3. The partial image extractor 32, for example, determines the same person contained in Images IM1 to IM3 by a training model to which face images are input and that thus specifies and outputs a person. In the example illustrated in FIG. 4, the partial image extractor 32 inputs the partial images of Areas A1 to A7, Areas B1 to B7, and Areas C1 to C7 to the training model and thus determines the same person contained in Images IM1 to IM3. The partial image extractor 32, for example, may determine the same person based on a position of the subject to be imaged contained in Images IM1 to IM3. The partial image extractor 32, for example, specifies User U1 contained in Images IM1 to IM3 and collects Area A1, Area B1, and Area C1 that are contained in Images IM1 to IM3 and in which User U1 is located. In other words, the partial image extractor 32 determines that the same person is located in Area A1, Area B1, and Area C1. The partial image extractor 32 executes the same process also on Users U2 to U7. Then the process proceeds to step S18.

Continuous photos consisting of multiple images may be managed as one group. For example, Images IM1 to IM3 are regarded as continuous photos G1. In this case, Image IM1 is presented as Image G1-1, Image IM2 is presented as Image G1-2, and Image IM3 is presented as Image G1-3.

The partial image extractor 32 adds tag information to the partial images of each subject to be imaged (step S18). The tag information is information for associating a subject to be imaged with the partial images among the multiple images. The partial image extractor 32, for example, adds the same tag information to the partial images of the same person in the multiple images. In the example illustrated in FIG. 4, the partial image extractor 32, for example, adds the same tag information T1 to each of Area A1 of Image IM1, Area B1 of Image IM2, and Area C1 of Image IM3. The partial image extractor 32, for example, adds the same tag information T2 to each of Area A2 of Image IM1, Area B2 of Image IM2, and Area C2 of Image IM3. The partial image extractor 32, for example, adds the same tag information T3 to each of Area A3 of Image IM1, Area B3 of Image IM2, and Area C3 of Image IM3. The partial image extractor 32, for example, adds the same tag information T4 to each of Area A4 of Image IM1, Area B4 of Image IM2, and Area C4 of Image IM3. The partial image extractor 32, for example, adds the same tag information T5 to each of Area A5 of Image IM1, Area B5 of Image IM2, and Area C5 of Image IM3. The partial image extractor 32, for example, adds the same tag information T6 to each of Area A6 of Image IM1, Area B6 of Image IM2, and Area C6 of Image IM3. The partial image extractor 32, for example, adds the same tag information T7 to each of Area A7 of Image IM1, Area B7 of Image IM2, and Area C7 of Image IM3. Then the process proceeds to step S20.

The partial image extractor 32 causes the storage 26 to stores the partial images to which the tag information are added in the storage 26 (step S20). Then the process proceeds to step S22.

The vote unit 36 sets a range of subjects eligible to vote (step S22). For example, the vote unit 36 sets only the subjects to be imaged who are in the group photos for a range of subjects eligible to vote. In the example illustrated in FIG. 3 in this case, the vote unit 36 sets Users U1 to U7 for the range of subjects eligible to vote. For example, the vote unit 36 sets members of a group to which the subjects to be imaged in the group photos belong as the range of subjects eligible to vote. The group to which the subjects belong is, for example, a unit such as a school, a class in a school, or an extracurricular activity. When the subjects to be imaged are toddlers or the like, and are not able to vote, guardians of the subjects to be imaged may be in the range of subjects eligible to vote. For example, the vote unit 36 sets all the persons for the range of subjects eligible to vote. When all the persons are set for the range of subjects eligible to vote, the vote unit 36 may set a condition for ending votes, such as the number of persons eligible to vote. Then the process in FIG. 2 ends.

### Image Processing

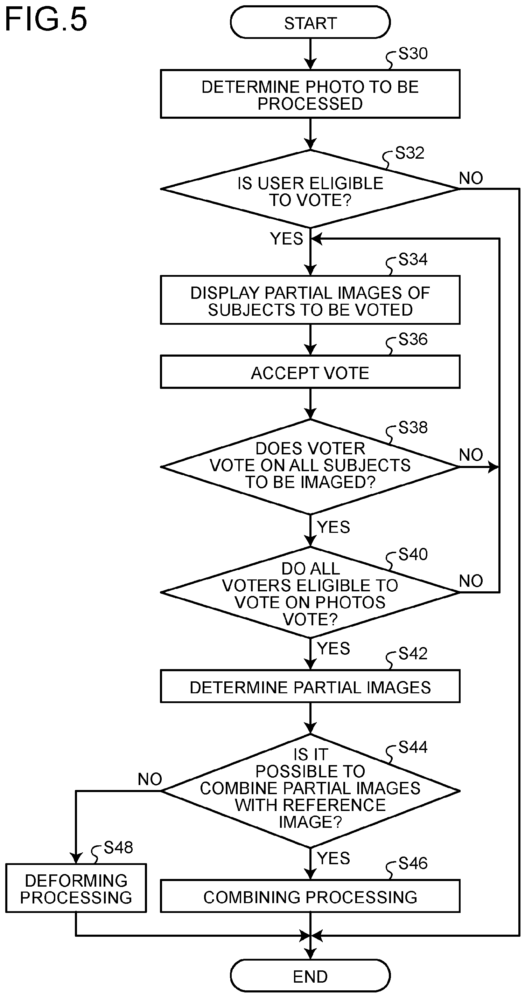

Using FIG. 5, the image processing according to the first embodiment will be described. FIG. 5 is a flowchart illustrating a flow of the image processing according to the first embodiment.

In the process illustrated in FIG. 5, the subjects to be imaged contained in the group photos are set for the subjects eligible to vote.

The controller 28 determines a photo to be processed (step S30). Specifically, at step S30, for example, the controller 28 causes the display 24 to display each of the continuous photos of the photos to be processed and on which votes are being accepted. In other words, there may be multiple continuous photos. The controller 28, for example, displays one photo that is captured first as a representative photo among the continuous photos. A photo on which votes are being accepted is a photo on which voting has not ended. The controller 28 determines the continuous photos that are selected via the input unit 22 by a user as photos to be processed among the continuous photos on which voting is being accepted and that are displayed on the display 24. A continuous photos selected by a user is sometimes referred to as photos to be processed below. When the input unit 22 is a touch panel, the controller 28 regards the continuous photos displayed in an area touched by the user among the continuous photos on which voting is being accepted and that are displayed on the display 24 as photos to be processed. Before step S30, a step of setting subjects eligible to vote may be contained. Then the process proceeds to step S32.

The individual identifier 34 determines whether the user who selects the photo is a user eligible to vote (step S32). Specifically, when the user who selects the photo at step S30 is contained in the photo to be processed, the individual identifier 34 determines that the user who selects the photo is a user eligible to vote. For example, using the training model that outputs information presenting whether the user is contained in the photo by an input of a face image of the user who selects the photo, the individual identifier 34 selects whether the user who selects the photo is contained in the photo to be processed. For example, when the user who selects the photo is User U1 and the image to be processed is Image IM1, it is determined that User U1 is a user eligible to vote. Such a training model, for example, may be built before starting the process in FIG. 5. In this case, when the user selects a photo at step S30, the image capturing controller 30 may control the imager 20 and cause the imager 20 to capture an image containing the face of the user who selects the photo. Accordingly, using the image that is captured when the user selects a photo at step S30, the individual identifier 34 is able to determine whether the user who selects the photo is a user eligible to vote. For example, the individual identifier 34 may determine whether the user who selects the photo is a user eligible to vote based on whether the user who selects the photo is a user that is registered in advance. In this case, the individual identifier 34, for example, may determine whether the user who selects the phot is a user eligible to vote by password authentication or biometric authentication. Furthermore, in another example, the individual identifier 34 may issue an authentication code for voting on each continuous photos and notify the user eligible to vote, and the user may input the authentication code and thus the individual identifier 34 may determine whether the user is a user eligible to vote. When it is determined that the user who selects the photo is a user eligible to vote (step S32: Yes), the process proceeds to step S34. A user who is determined to be eligible to vote at step S30 is sometimes referred to as a voter. When it is not determined that the user who selects a photo is a user eligible to vote (step S32; No), the process in FIG. 5 ends.

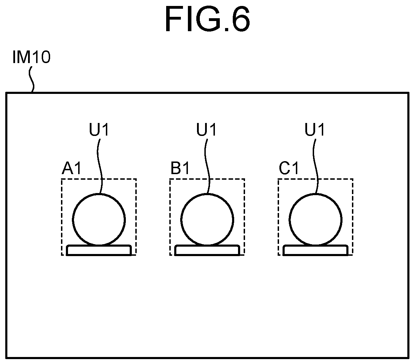

The vote unit 36 causes the display 24 to display the partial images of the voted person who are the subjects to be imaged (step S34). FIG. 6 is a diagram for explaining a method of displaying the partial images according to the first embodiment. As illustrated in FIG. 6, as for User U1 illustrated in FIG. 4, the vote unit 36 causes the display 24 to display a list image IM10 in which Area A1 of Image IM1, Area B1 of Image IM2, and Area C1 of Image IM3 are listed and displayed. The vote unit 36 causes the display 24 to display the list image of each of the users illustrated in FIG. 4. For example, when the input unit 22 includes a button for switching the area image, the vote unit 36 may cause the images of Area A1, Area B1, and Area C1 to be displayed in a switched manner each time the button for switching the area image of the input unit is pushed. The vote unit 36, for example, may display the entire Image IM1, Image IM2, and Image IM3. Note that the vote unit 36 may display the number of votes. For example, when one vote has been casted for Area A1 of Image IM1, three votes have been casted for Area B1 of Image IM2, and no vote is casted for Area C1 of Image IM3, the number of votes on each of the images is displayed on the display 24. Then the process proceeds to step S36.

The vote unit 36 accepts a vote (step S36). Specifically, in the example illustrated in FIG. 6, the vote unit 36, for example, accepts, as a result of voting, one partial image that is requested as a composite image and that is selected via the input unit 22 from among Area A1, Area B1 and Area C1. When the input unit 22 is a touch panel, the vote unit 36 accepts, as a result of voting, the image that is displayed in an area touched by the user among the images that are displayed on the display 24. Then the process proceeds to step S38.

The vote unit 36 determines whether the voter votes on all the subjects to be imaged (step S38). Specifically, in the example illustrated in FIG. 4, the vote unit 36 determines whether User U1 who is a voter votes on each of Users U1 to U7. When it is determined that the voter votes on all the subjects to be imaged (Step S38; Yes), the process proceeds to step S40. When it is not determined that the voter votes on all the subjects to be imaged (step S38; No), the process proceeds to step S34. In other words, the vote unit 36 repeats the process from step S34 to step S38 until the voter ends voting on all the subjects to be imaged.

The vote unit 36 determines whether all the voted person eligible to vote on the photos vote (step S40). Specifically, in the example illustrated in FIG. 4, the vote unit 36 determines whether each of Users U1 to U7 votes. When it is determined that all the voted person vote (step S40; Yes), the process proceeds to step S42. When it is not determined that all the voted person vote (step S40; No), the process proceeds to step S34. In other words, the vote unit 36 repeats the process from step S34 to step S40 until voting by all the voted person ends.

When it is determined "Yes" at step S40, the partial image determination unit 38 determines partial images to be combined with a reference image (step S42). Specifically, based on the result of votes of all the voted person, the partial image determination unit 38 determines a partial image for each of the subjects to be imaged. For example, the partial image determination unit 38 adds one point for one vote for each of the subjects to be imaged and determines the partial image with the largest number of points as a partial image to be combined with a reference image. The partial image determination unit 38, for example, may weight the point according to the voted person.

For example, the partial image determination unit 38 may weight the point such that an intention of the subject herself/himself is respected. The subject herself/himself is a user herself/himself who is in the partial image which is subject to vote and the intention of the subject herself/himself is that the user votes on the partial image of the user herself/himself. In this case, the partial image determination unit 38 weights the point of a vote for the subject herself/himself by a number larger than 1, for example, 1.5 times and weights the point of a vote for a subject other than the subject herself/himself by a number smaller than 1, for example, 0.7 times. For example, when four persons in total comprising the subject herself/himself and the three subjects other than the subject herself/himself vote, it becomes (1.5×1)+(0.7×3)=3.6 points.

For example, the partial image determination unit 38 may weight points such that an effect of malicious votes from others is inhibited. In this case, the controller 28, for example, preferably includes a facial expression analyzer capable of analyzing a facial expression of the subject to be imaged contained in a group photo. The partial image determination unit 38, for example, weights the point of a vote for a partial image on which the facial expression analyzer determines that the eyes are closed by, for example, 0.5 times. The partial image determination unit 38 weights the point of a vote for a partial image on which the facial expression analyzer determines a smiling face by a number larger than 1, for example, 1.5 times.

As for a user who votes on a partial image of any subject to be imaged in which the eyes thereof are closed in the photo to be processed, even when the user votes on a partial image of another subject to be imaged in which the eyes are not closed, the partial image determination unit 38 may weight the point by a value smaller than one. When the photo to be processed is a group photo of school or the like, the partial image determination unit 38, for example, may set a neutral person such as a teacher or a photographer as a manager, and weight the point of a vote of the manager by a value larger than one.

The image processor 40 determines whether it is possible to combine the partial images determined by the partial image determination unit 38 with a reference image as a base of a group photo (step S44). When a degree of coincidence between an orientation of the face contained in the partial image and an orientation of the face contained in the reference image is at or above a predetermined threshold, the image processor 40 determines that it is possible to combine the images and when it is under the predetermined threshold, the image processor 40 determines that it is not possible to combine the images. For example, the image processor 40 determines that it is not possible to combine the images when the partial image is a face turning away and the reference image is a face facing front. The image processor 40 may determine that it is possible to combine images when the degree of coincidence between a size of the face contained in the partial image and a size of the face contained in the reference image is at or above a predetermined threshold. When it is determined that it is possible to combine the partial image with the reference image as the base of a group photo (step S44; Yes), the process proceeds to step S46. When it is not determined that it is possible to combine the partial image with the reference image as the base of a group photo (step S44; No), the process proceeds to step S48.

When it is determined "Yes" at step S44, the image processor 40 executes combining processing on the partial image that is determined by the partial image determination unit 38 (step S46). Specifically, the image processor 40 executes the combining processing by replacing an image of a corresponding part in the reference image as the base of a group photo with the partial image that is determined by the partial image determination unit 38. Note that any method of selecting the reference image is used and, for example, a photo with the least replacement with partial images may be determined automatically or a photo may be determined according to votes by the subjects to be imaged. For the combining processing, an existing image processing technique is usable.

When it is determined "No" at step S44, the image processor 40 executes deforming processing on a corresponding part of the reference image as the base of a group photo (step S48). Specifically, based on the partial image that is determined by the partial image determination unit 38, the image processor 40 executes the deforming processing on a corresponding part of the reference image. For example, the image processor 40 executes the deforming processing on a corresponding part of the reference image such that the corresponding part is approximated to the partial image that is determined by the partial image determination unit 38. For example, when the partial image is a smiling face turning away, the image processor 40 deforms the corresponding face in the reference image into a smiling face facing front based on the smiling face turning away. For example, when a size of the face contained in the partial image is smaller than the corresponding part of the reference image, the image processor 40 enlarges and deforms the partial image. For example, the image processor 40 may deform a corresponding face in the reference image into a smiling face by a machine learning method. In this case, the image processor 40 may input a partial image to a training model that is trained to output image data of a face facing front when image data on a face turning away is input, and based on the output image data on the face facing front, it may deform the corresponding face in the base image. In this case, the training model may be stored in the storage 26. At step S48, the image processor 40 may perform the combining processing partly and perform the deforming processing partly.

In the process illustrated in FIG. 5, step S44 may be omitted. In other words, step S46 may be executed after the process of step S42, and step S48 may be executed after the process of step S42.

As described above, the first embodiment determines a partial image to be combined with a group photo based on results of votes by all the multiple subjects to be imaged that are contained in the group photo. The first embodiment executes the combining processing of combining a partial image when it is determined to be possible to combine the partial image with the group photo, and executes the deforming processing of deforming a group photo based on the partial image when it is determined not to be possible to combine the partial image with the group photo. Accordingly, the first embodiment makes it possible to generate a group photo with which all the subjects to be imaged are satisfied.

### [Second Embodiment]

### Image Processing

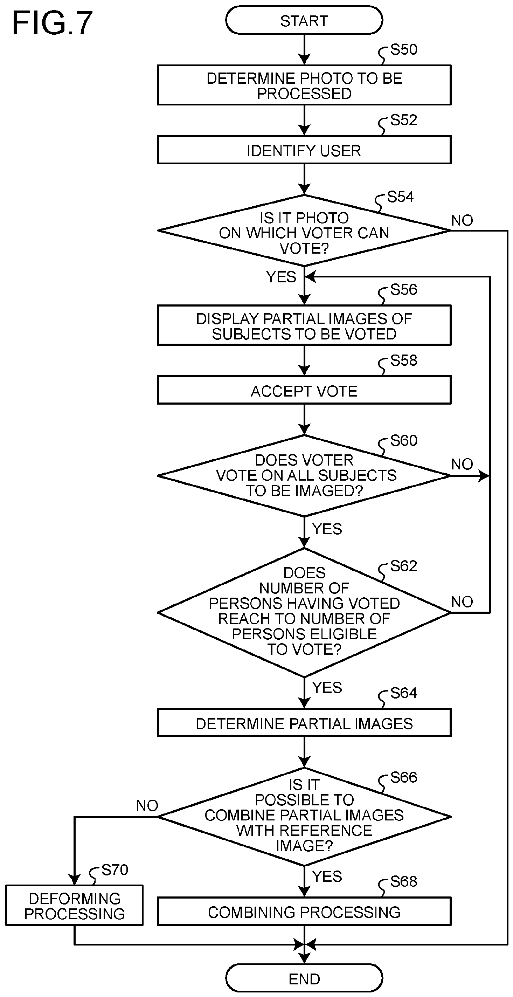

Using FIG. 7, image processing according to a second embodiment will be described. FIG. 7 is a flowchart illustrating a flow of the image processing according to the second embodiment.

In the process illustrated in FIG. 7, a range of subjects eligible to vote is set and a vote end condition is set.

Description of the process of step S50 will be omitted since the process is the same as the process of step S30 illustrated in FIG. 5. Note that a step of setting a vote end condition may be contained before step S50. The vote end condition is, for example, the number of persons eligible to vote and only the number of persons are eligible to vote. The vote end condition is, for example, a period during which the subject can vote, and after the period, the subject cannot vote.

The individual identifier 34 identifies a user who selects a photo (step S52). For example, a user logins to vote and accordingly the individual identifier 34 identifies the user. Login, for example, may be performed by a known method, such as password authentication or biometric authentication. Then the process proceeds to step S54.

The individual identifier 34 determines whether a photo that is selected by the user is a photo on which the voter can vote (step S54). Specifically, when it is determined that the user who selects the photo, that is, the voter is a user corresponding to a subject eligible to vote on the photo, the individual identifier 34 determines that the photo that is selected by the user is a photo on which the voter can vote. When it is determined that the voter is a user not corresponding to a subject eligible to vote on the photo, the individual identifier 34 determines that the photo that is selected by the user is not a photo on which the voter can vote. When it is determined that the photo selected by the user is a photo on which the voter can vote (step S54; Yes), the process proceeds to step S56. When it is determined that the photo selected by the user is not a photo on which the voter can vote (step S54; No), the process in FIG. 7 ends.

The processes from step S56 to step S60 are the same as the processes from step S34 to step S38 illustrated in FIG. 5 and thus description will be omitted.

When it is determined "Yes" at step S60, the vote unit 36 determines whether the photo to be processed meets the vote end condition (step S62). For example, in the case where the vote end condition is a condition that up to 10 persons are eligible to vote, when the number of persons having voted is 10 at step S62, it is determined that the vote end condition is met. When it is determined that the vote end condition is met (step S62: Yes), the process proceeds to step S64. When it is not determined that the vote end condition is met (step S62; No), the process proceeds to step S56. In other words, the vote unit 36 repeats the process from step S56 to step S62 until the vote end condition is met.

Description of the process of step S64 and step S70 will be omitted since the process is the same as the process of step S42 and step S48 illustrated in FIG. 5.

As described above, the second embodiment determines a partial image to be combined with a group photo based on the result of votes on which the range of subjects eligible to vote and the vote end condition are set. The second embodiment executes the combining processing of combining a partial image with a group photo when it is determined to be able to combine the partial image with the group photo and executes the deforming processing of deforming a group photo based on a partial image when it is determined not to be able to combine the partial image with the group photo. Accordingly, the second embodiment can generate a group photo with which all subjects to be imaged are satisfied.

### [Third Embodiment]

### Image Processing System

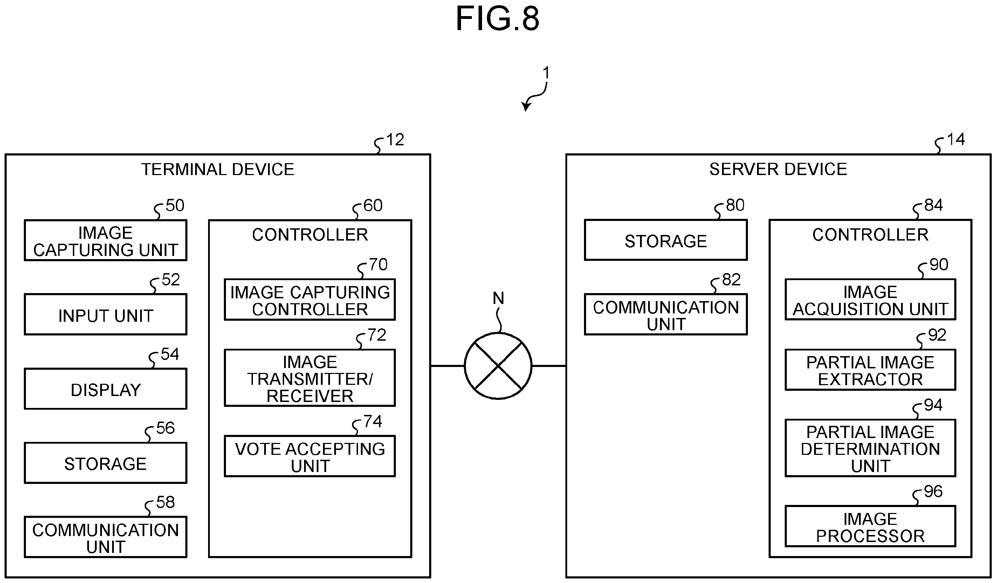

Using FIG. 8, an example of a configuration of an image processing system according to a third embodiment will be described. FIG. 8 is a block diagram illustrating the example of the image processing system according to the third embodiment.

As illustrated in FIG. 8, the image processing system 1 includes a terminal device 12 and a server device 14. The terminal device 12 and the server device 14 are connected via a network N such that communication therebetween is enabled. In the example illustrated in FIG. 8, only one terminal device 12 is illustrated. However, practically, multiple terminal devices 12 and the server device 14 are connected via the network N such that communication therebetween is enabled. The network N is, for example, the Internet. However, the network N is not limited thereto. The image processing system 1 is a system in which, when a group photo containing multiple subjects to be imaged or the like is captured, the server device 14 accepts votes from the terminal devices 12 of the subjects to be imaged and generates a group photo with which all the subjects to be imaged are satisfied.

The terminal device 12 is a terminal device which a user who is the subject to be imaged owns. The terminal device 12 is, for example, a smartphone, a digital camera, or a PC. However, the terminal device 12 is not limited thereto. The terminal devices 12, for example, are able to share data of images captured by each of the terminal devices 12 via the server device 14.

The server device 14 is, for example, a cloud server. The server device 14, for example, groups image data on group photos from the terminal devices 12. The server device 14, for example, accepts votes from the terminal devices 12 and generates a group photo with which all the subjects to be imaged are satisfied.

### Terminal Device

The terminal device 12 includes an imager 50, an input unit 52, a display 54, a storage 56, a communication unit 58, and a controller 60. The terminal device 12 need not include the imager 50.

The imager 50 is a camera that captures an image of a subject to be imaged within an image capturing area. The imager 50, for example, captures a group photo containing multiple subjects to be imaged who are positioned in the image capturing area.

The input unit 52 receives various types of input operations on the terminal device 12. The input unit 52 receives an operation of voting a partial image to be combined with the reference image. The input unit 52 outputs an input signal corresponding to a received input operation to the controller 60. The input unit 52, for example, includes a touch panel, a button, and a switch. When a touch panel is used as the input unit 52, the input unit 52 is arranged on the display 54.

The display 54 displays various types of videos. The display 54, for example, displays a group photo containing multiple subjects to be imaged that is captured by the imager 50. The display 54, for example, displays a group photo that is captured by another terminal device 12 and stored in the server device 14 and that contains multiple subjects to be imaged. When the terminal device 12 does not include the imager 50, the display 54 receives a group photo via the communication unit 58 from an external image capturing device not illustrated in the drawings and displays the group photo. The display 54 is, for example, a display containing a liquid crystal display (LCD), organic Electro-Luminescence, or the like.

The storage 56 stores various types of information. The storage 56 stores information such as content of computation by the controller 60 and programs. The storage 56, for example, includes at least one of a main storage device such as a RAM or a ROM, and an external storage device such as a HDD.

The communication unit 58 transmits and receives various types of information to and from an external device by wireless communication. The communication unit 58 transmits and receives various types of information between the communication unit 58 and the server device 14 via the network N. The communication unit 58, for example, transmits image data on a group photo that is captured by the imager 50 to the server device 14 via the network N. The communication unit 58, for example, transmits vote information on votes on a partial image that are input to the input unit 52 to the server device 14 via the network N. The communication unit 58 is realized by a communication module that performs communication by a system, such as a wireless LAN (Local Area Network), Wi-Fi (trademark), and Bluetooth (trademark).

The controller 60 controls each of the units of the terminal device 12. The controller 60, for example, includes an information processing device such as a CPU or a MPU, and a storage device such as a RAM or a ROM. The controller 60, for example, may be realized by an integrated circuit such as an ASIC or a FPGA. The controller 60 may be realized by a combination of hardware and software.

The controller 60 includes an image capturing controller 70, an image transmitter/receiver 72, and a vote accepting unit 74.

The image capturing controller 70 controls the imager 50 and causes the imager 50 to capture images. The image capturing controller 70, for example, controls the imager 50 and causes the imager 50 to take group photos containing multiple subjects to be imaged. The image capturing controller 70 acquires the images that are captured by the imager 50. Note that, when the terminal device 12 does not include the imager 50, the controller 60 does not include the image capturing controller 70.

The image transmitter/receiver 72 controls the communication unit 58 and causes the communication unit 58 to transmit images relating to the group photos that are captured by the imager 50 to the server device 14. The image transmitter/receiver 72 controls the communication unit 58 and causes the communication unit 58 to receive images relating to group photos that are captured by another terminal device 12 or by an external image capturing device not illustrated in the drawings from the server device 14 via the network N. The image transmitter/receiver 72 controls the communication unit 58 and causes the communication unit 58 to receive partial images to be combined with a reference image.

The vote accepting unit 74 accepts votes for determining partial images to be combined with the reference image. The vote accepting unit 74 controls the communication unit 58 to cause the communication unit 58 to transmit vote information on a result of votes to the server device 14 via the network N.

### Server Device

The server device 14 includes a storage 80, a communication unit 82, and a controller 84.

The storage 80 stores various types of information. The storage 80 stores information such as content of computation by the controller 84 and programs. The storage 80, for example, includes at least one of a main storage device such as a RAM or a ROM, and an external storage device such as a HDD.

The storage 80 stores images that are captured by each of the terminal devices 12 or an external image capturing device not illustrated in the drawings that is connected with the server device 14 via the network N. The storage 80, for example, stores an image and the terminal device 12 that captures the image in association with each other.

The communication unit 82 transmits and receives various types of information to and from an external device by wireless communication. The communication unit 82, for example, transmits and receives various types of information between the communication unit 82 and the external image capturing device not illustrated in the drawings via the network N. The communication unit 82, for example, receives image data that relates to group photos from the terminal device 12 or the external image capturing device not illustrated in the drawings via the network N. The communication unit 82 receives vote information on votes on partial images from the terminal devices 12 via the network N. The communication unit 82, for example, is realized by a communication module that performs communication by a system, such as a wired LAN, a wireless LAN, Wi-Fi, and Bluetooth.

The controller 84 controls each of the units of the server device 14. The controller 84, for example, includes an information processing device such as a CPU or a MPU, and a storage device such as a RAM or a ROM. The controller 84, for example, may be realized by an integrated circuit such as an ASIC or a FPGA. The controller 84 may be realized by a combination of hardware and software.

The controller 84 includes an image acquisition unit 90, a partial image extractor 92, and a partial image determination unit 94, and an image processor 96.

The image acquisition unit 90 acquires images from each of the terminal devices 12 or the external image capturing device not illustrated in the drawings via the network N. The image acquisition unit 90 acquires images relating to group photos containing multiple subjects to be imaged from each of the terminal devices 12 via the network N. The image acquisition unit 90 associates the image acquired from each of the terminal devices 12 via the network N with the terminal device 12 with each other and stores the image in the storage 80.

The partial image extractor 92 extracts a predetermined area as a partial image from the image stored in the storage 80. The partial image extractor 92 extracts an image of a face area of each of the subjects to be imaged from the image relating to the group photo which contains multiple subjects to be imaged and which is stored in the storage 80. The partial image extractor 92 stores the extracted partial images in the storage 80.

Based on the result of votes on the partial images that are accepted from the terminal devices 12, the partial image determination unit 94 determines the partial images to be combined with the reference image.

Based on the partial image that is determined by the partial image determination unit 94, the image processor 96 executes image processing on a corresponding area in the reference image. The image processor 96, for example, executes the combining processing of combining the partial image with the reference image or deforming processing of deforming the reference image.

As described above, in the third embodiment, the server device determines the partial images to be combined with the group photo based on the result of votes accepted from the terminal devices 12. Accordingly, in the third embodiment, it is possible to generate a group photo with which all subjects to be imaged are satisfied.

In the third embodiment, it is possible to vote on the partial images to be combined with the reference image by the terminal device 12 which is owned by each of the users. Thus the third embodiment can increase convenience.

Each component of devices illustrated in the drawings is a functional idea and need not be configured physically as illustrated in the drawings. In other words, specific modes of distribution and integration of each device are not limited to those illustrated in the drawings and all or part of the devices can be configured by being functionally or physically distributed or integrated in any unit according to various types of load and usage. Furthermore, all or given part of each processing function implemented by each device can be realized by a CPU or a GPU and a program that is analyzed and executed by the CPU or the GPU (Graphics Processor) or can be realized as hardware according to a wired logic.

The embodiment has been described and the content of these embodiments does not limit embodiments. The above described components include those easily assumed by those skilled in the art and those substantially the same, that is, in a range of equivalence. Furthermore, the components described above can be combined as appropriate and the configuration of each of the embodiments can be combined. Furthermore, it is possible to make various omissions, replacements, and changes of the components without departing from the scope of the embodiment.

### Industrial Applicability

The image processing device, the server device, and the image processing method of the present disclosure, for example, can be used for an information processing device such as a computer.

### Reference Signs List

10 IMAGE PROCESSING DEVICE
20, 50 IMAGER
22, 52 INPUT UNIT
24, 54 DISPLAY
26, 56, 80 STORAGE
28, 60, 84 CONTROLLER
30, 70 IMAGE CAPTURING CONTROLLER
32, 92 PARTIAL IMAGE EXTRACTOR
34 INDIVIDUAL IDENTIFIER
36 VOTE UNIT
38, 94 PARTIAL IMAGE DETERMINATION UNIT
40, 96 IMAGE PROCESSOR
58, 82 COMMUNICATION UNIT
72 IMAGE TRANSMITTER-RECEIVER
74 VOTE ACCEPTING UNIT
90 IMAGE ACQUISITION UNIT

## Claims

1. An image processing device comprising:
a partial image extractor configured to extract partial images of multiple subjects to be imaged who are contained in each of multiple images captured at different times;
a vote unit configured to accept multiple votes by multiple voters on the partial images of each of the subjects to be imaged among the partial images that are extracted by the partial image extractor;
a partial image determination unit configured to determine one of the partial images based on a result of the votes on the partial images that are accepted by the vote unit; and
an image processor configured to generate a partial image of the subject based on the partial image that is determined by the partial image determination unit.

2. The image processing device according to claim 1, wherein the image processor is further configured to combine the generated partial image as the partial image of the subject in the captured image.

3. The image processing device according to claim 1, wherein the image processor is further configured to deform the partial image of the subject in the captured image such that the partial image of the subject in the captured image is approximated to the determined partial image.

4. The image processing device according to claim 1, wherein the partial image determination unit is further configured to determine the partial image by weighting the vote according to each of the multiple voters.

5. The image processing device according to claim 4, wherein, when the voter votes on the partial image of the voter herself/himself, the partial image determination unit is further configured to weight the vote by a value greater than that when the voter votes on the partial images of the voters other than the voter herself/himself, and thereby determine the partial image.

6. The image processing device according to claim 1, further comprising a facial expression analyzer configured to output a determination result by analyzing a facial expression of the subject to be imaged,
wherein the partial image determination unit is further configured to determine the partial image by weighting the vote according to the determination result of the facial expression analyzer.

7. The image processing device according to claim 4, wherein the partial image determination unit is further configured to set a person who is in a neutral position as a manger, and when the manager votes, weight the vote by a value greater than that when persons other than the manager vote, and thereby determine the partial image.

8. A server device comprising:
a partial image extractor configured to extract partial images of multiple subjects to be imaged who are contained in each of multiple images captured at different times;
a partial image determination unit configured to determine one of the partial images from the partial images of each of the subjects to be imaged among the partial images that are extracted by the partial image extractor based on multiple votes by multiple terminal devices; and
an image processor configured to generate a partial image of the subject based on the partial image that is determined by the partial image determination unit.

9. An image processing method comprising:
a step of extracting partial images of multiple subjects to be imaged who are contained in each of multiple images captured at different times;
a step of determining one of the partial images from the partial images of each of the subjects to be imaged among the extracted partial images based on multiple votes by multiple voters; and
a step of generating a partial image of the subject based on the determined partial image.
